# EUROPEAN PATENT APPLICATION

(11) **EP 2 390 794 A1**
(43) Date of publication of application: **30.11.2011**
(21) Application number: 09834059.9
(22) Date of filing: 06.11.2009
(51) Int. Cl.: G06F 17/30, G06F 21/00

(54) **INTERACTIVE PROCESSING METHOD AND APPARATUS BETWEEN CONTENT-ID MANAGEMENT SERVERS**

(30) Priority: 26.12.2008 CN 200810241161
(71) Applicant: Huawei Technologies Co., Ltd., Shenzhen, Guangdong 518129 (CN)
(72) Inventor: LIU, Yijun, 518129 Shenzhen (CN); GAO, Hongtao, 518129 Shenzhen (CN)
(74) Representative: Kreuz, Georg Maria
(86) International application number: PCT/CN2009/074847
(87) International publication number: WO 2010/072106

(57) **Abstract**

An interactive processing method and an apparatus between Content-ID management servers are provided. The method includes: after receiving a content identification request from a content management entity (CME), sending, by a local Content-ID management server (CIM), a request to a center CIM to inquire index data corresponding to a content feature value of a content requested to be identified if registration data of the content requested to be identified is not found in the local CIM; receiving an inquiry result returned by the center CIM, and if the inquiry result carries an ID of a remote register home CIM, requesting, by the local CIM, attribute metadata of the content requested to be identified from a corresponding register home CIM according to the ID of the remote register home CIM.

## Description

This application claims priority to Chinese Patent Application No. 200810241161.4, filed with the Chinese Patent Office on December 26, 2008 and entitled "INTERACTIVE PROCESSING METHOD AND APPARATUS BETWEEN CONTENT-ID MANAGEMENT SERVERS", which is incorporated herein by reference in its entirety.

### FIELD OF THE INVENTION

The present invention relates to secure content identification, and in particular, to an interactive processing method and apparatus between Content-Identifier (ID) management servers (CIMs).

### BACKGROUND OF THE INVENTION

A Secure Content Identification Mechanism (SCIDM) is a mechanism for identifying a content during content transmission, and then controlling the content (prohibiting or allowing transmission of the content) according to a predefined policy rule. The main concept of the SCIDM is that, when detecting the content transmission, a Content Management Entity (CME) may send a request to a Content-ID Manager Server by extracting a content feature value to obtain content-related attribute metadata, and correspondingly control the content (prohibiting or allowing transmission) after comparing the obtained attribute metadata with the preset policy rule.

The CME has functions of detecting and controlling a content, specifically, detecting whether the content is transmitted in a network, and carrying out a control action like limitation or release by comparing the corresponding preset policy rule with the content-associated attribute metadata.

The CIM is configured to store registration data corresponding to the content, perform a feature-value-extraction operation on the content, and provide a server for inquiring the registration data corresponding to the content. The registration data of the content includes data such as a Content-ID, a registered content feature value, and attribute metadata of the content.

The Content-ID, also referred to as a Content ID, is a character string for identifying the content, and is generated when the CIM registers the content.

The attribute metadata of the content refers to a set of data which expresses content attributes and is described in a certain format, for example, a content type, a content size, a content format, and a classification level for content presentation.

The content feature value, also referred to as a feature value of a content or a content feature extraction value, refers to an extraction value for representing the content in mathematical description, which is obtained by performing an extraction operation (such as a hash operation) on the content through a particular feature-value-extraction algorithm (such as a hash algorithm, like MD5 (Message Digest-5) or SHA-1 (Secure Hash Algorithm-1)). The extraction value obtained through a content feature-value-extraction algorithm may be used to express a content feature.

The registered content feature value specifically refers to a content feature extraction value in an application scenario, and refers to a content feature value which is stored by the CIM and corresponds to the content after the content is successfully registered with the CIM. The content feature value and the content itself may form a corresponding relationship. The content feature value is extracted through the designated feature-value-extraction algorithm (such as a hash algorithm like MD5(Message Digest-5) or SHA-1 (Secure Hash Algorithm-1)). The extraction operation may be implemented at a requester end which requests registering the content, or is implemented by performing a feature-value-extraction operation on the content when the CIM receives the content requested to be registered.

In order to enable the CME to obtain the attribute metadata corresponding to the content from the CIM, so as to make the transmssion of the conent (whether the content transmission is allowed) under control, a content holder or a content owner (briefly referred to as a content registrant) firstly needs to register the content with the CIM during content transmission, and the CIM generates corresponding registration data after the registration. The registration includes the following steps. The content registrant sends a request to the CIM, for registering the content, where the request includes the content itself or a content feature value which corresponds to the content and is obtained through a particular feature-value-extraction algorithm, and includes the attribute metadata of the content, for example, a classification ID of a movie in a classification standard. After receiving the request, if the request message does not include a feature value, the CIM performs a particular feature-value-extraction operation on the received content to obtain the feature value of the content, and inquires the CIM to determine whether registration data corresponding to the content feature value exists in the CIM, and if registration data corresponding to the content feature value exists in the CIM, it indicates that the content has been registered; if no registration data corresponding to the content feature value exists in the CIM, the content may be registered, that is, a new Content-ID (Content ID) is generated for the content. The Content-ID is associated with the content feature value and the attribute metadata, and stored into a database. At this time, the stored content feature value is the registered content feature value. After the processing, the CIM returns a processing result of the registration to the content registran. By now, the registration flow of the content ends.

The CME may extract the content feature value, and send the extracted content feature value to the CIM, so as to request for obtaining one or more pieces of attribute metadata corresponding to the content feature value. After receiving the request from the CME, the CIM, according to the received content feature value, compares and searches for the registered content feature value corresponding to the content in the database stored with the registration data. After the corresponding registered content feature value is found, the attribute metadata corresponding to the content can be obtained through association, and the attribute metadata associated with the request is returned according to the specific request, sent by the CME, for obtaining one or more pieces of attribute metadata.

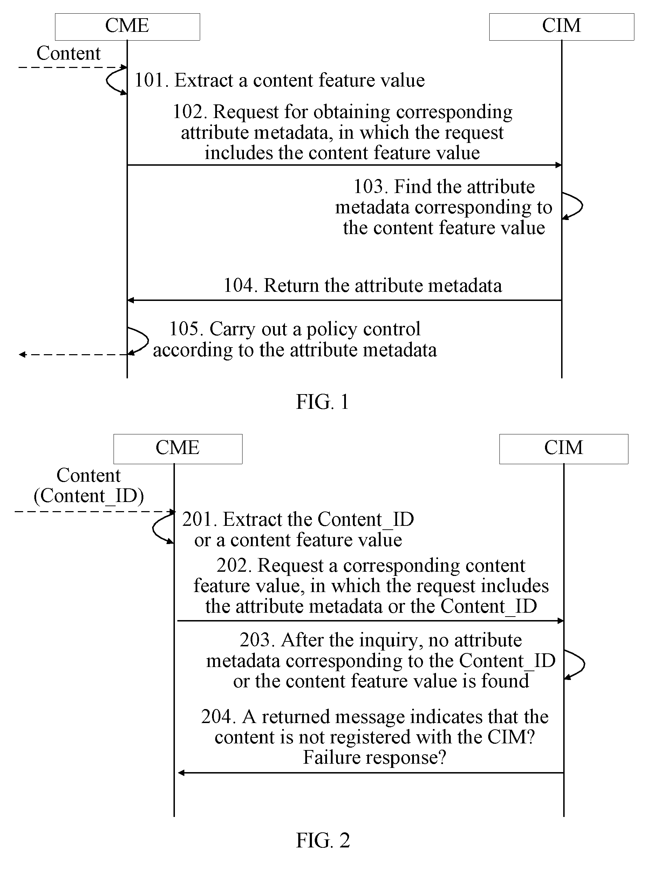

FIG 1 is a flow chart of interaction between a CME and a CIM to which the CME belongs. When the CME detects content transmission, step 101 is performed, that is, the CME extracts the content feature value of the content through a certain feature-value-extraction algorithm. In step 102, the CME sends the extracted feature value to the CIM to which the CME belongs, that is, a local CIM, to request the local CIM to identify the content, so as to obtain one or more pieces of attribute metadata corresponding to the content. In step 103, after receiving the request from the CME, the local CIM, according to the received content feature value, compares and searches for a registered content feature value corresponding to the content in a database stored with the registration data. After the stored registered content feature value which matches with the content feature value is found, the attribute metadata corresponding to the content can be obtained through association, and therefore, one or more pieces of attribute metadata corresponding to the identification request may be searched for and obtained. In step 104, after the attribute metadata corresponding to the content is found, one or more pieces of attribute metadata corresponding to the request is returned according to a specific request of the CME. In step 105, after obtaining the relevant attribute metadata, the CME carries out a policy control action like prohibiting or allowing the content transmission according to description of the attribute metadata and the corresponding policy rule preset at the CME.

The prior art has the following disadvantages. When the CME requests the CIM to which the CME belongs to identify the content, if the attribute metadata corresponding to the content does not exist in the CIM, the CIM cannot identify the content.

As shown in FIG.2, when the CME detects content transmission, step 201 is performed, that is, if the content transmission includes both the content itself and the Content-ID (Content ID), the CME may extract the Content ID information, and if the content transmission includes the content itself only, the CME extracts the feature value of the content. In step 202, the CME sends the extracted Content ID information or the feature value to a CIM to which the CME belongs, and sends a request to the CIM, for obtaining the attribute metadata corresponding to the content. In step 203, after receiving the request, the CIM inquires, according to the received Content ID or content feature value, whether the Content ID or the registered content feature value corresponding to the Content ID or the content feature value in the request message exists in the registration data, so as to obtain one or more pieces of attribute metadata through association relationship between the Content ID (or the registered content feature value) and the attribute metadata. If the attribute metadata corresponding to the request is found, the attribute metadata information is returned to the CME according to the request (step 104 in FIG 1), so that the CME may carry out a next policy control operation after comparing the attribute metadata with the pre-stored policy rule. However, if the registration data corresponding to the content is not stored in the CIM to which the CME belongs, that is, the content may have corresponding registration data in other remote CIMs, and the CME cannot obtain the attribute metadata corresponding to the request from the CIM to which the CME belongs. At this time, how to perform step 204, that is, how to respond to the request of the CME, so as to enable the CME to obtain a correct response, and to perform the policy control over the content is a problem to be addressed. Though the CIM may return a failure response message, or indicate that no description information of the content-associated attribute metadata exists, the CME cannot obtain the attribute metadata, and therefore cannot carry out the policy control operation over the content.

In addition, in different CIM management domains, after the content detected by the CME is registered with one CIM, other CIMs in the CIM management domain cannot acquire the content. If the CIM which implements the registration is not the local CIM of the CME, the CME cannot request for obtaining the attribute metadata corresponding to the content either, and therefore cannot effectively process the content. If a simple multi-backup method for a content-associated record is adopted, it is apparently not suitable for effective resource utilization. The policy operation of the content should be responded in time, and how to solve the conflict between the timely policy operation of the content and the fact that no content-realted registration record exists in the requested CIM is an urgent problem to be solved.

### SUMMARY OF THE INVENTION

The present invention is directed to an interactive processing method and an apparatus between CIMs, so as to implement effective interaction between CIMs, thereby effectively identifying a content.

A local CIM described in the present invention refers to a CIM that receives an identification request from a CME, needs to process the identification request, and initiates interaction between CIMs accordingly. A register home CIM is designated for a registration of a content, that is, when the content is registered with a CIM, the CIM is referred to as a register home CIM of the content. A remote CIM is a designation relative to the local CIM, that is, in a content identification request, the CIM that receives the identification request from the CME is referred to as a local CIM, and other CIMs relative to the local CIM are referred to as remote CIMs. As for a remote register home CIM, it indicates that the register home CIM of the content is a remote CIM.

According to its first aspect the present invention provides an interactive processing method between CIMs, where the first implementation form of the method includes:
after receiving a content identification request from a CME, sending, by a local CIM, a request for inquiring index data corresponding to a content feature value of a content requested to be identified, to a center CIM, if registration data of the content requested to be identified is not found in the local CIM; and
receiving an inquiry result returned by the center CIM, and if the inquiry result carries an ID of a remote register home CIM, sending, by the local CIM and according to the ID of the remote register home CIM, a request for obtaining attribute metadata of the content requested to be identified, to a corresponding register home CIM.

The interactive processing method between CIMs includes in its second implementation form:
after receiving a content identification request from a CME, sending, by a local CIM and according to the pre-configured CIM list a request, to remote CIMs in a list, for obtaining attribute metadata corresponding to a content requested to be identified, if registration data of the content requested to be identified is not found in the local CIM; and
receiving response messages returned by the remote CIMs.

According to its second aspect the present invention provides an interactive processing apparatus between CIMs, where the first implementation form of the apparatus includes:
a receiving unit, configured to receive a content identification request from a CME;
an index inquiry unit, configured to send a request to a center CIM for inquiring index data corresponding to a content feature value of a content requested to be identified, if registration data of the content requested to be identified is not found in a local CIM; and
an attribute metadata request unit, configured to, after an inquiry result returned by the center CIM is received, send, according to an ID of the remote register home CIM, a request for obtaining attribute metadata of the content requested to be identified, to a corresponding register home CIM, if the inquiry result carries the ID of the remote register home CIM.

The interactive processing apparatus between CIMs includes in its second implementation form:
a receiving unit, configured to receive a content identification request from a CME;
an attribute metadata request unit, configured to send, according to the pre-configured CIM list, a request for obtaining attribute metadata corresponding to a content requested to be identified, to a remote CIM in a list, if registration data of the content requested to be identified is not found in a local CIM; and
an obtaining unit, configured to receive response messages returned by the remote CIMs.

According to its third aspect the present invention provides a temporary content processing method of a content manager, where the method includes:
after receiving a content identification request from a CME, generating, by a local CIM, a temporary Content-ID and temporary attribute metadata corresponding to a content if neither the local CIM nor a remote CIM includes registration data corresponding to a content feature value of the content requested to be identified.

According to its fourth aspect the present invention provides a temporary content processing apparatus of a content manager, where the apparatus includes:
a temporary registration unit, configured to, after a content identification request is received from a CME, generate a temporary Content-ID and temporary attribute metadata corresponding to a content if neither a local CIM nor a remote CIM includes registration data of a content feature value corresponding to the content requested to be identified.

In the present invention, the problem that how a local CIM effectively interacts with the remote CIM is addressed when no attribute metadata associated with the content requested, by the CME, to be identified, exists in the CIM to which the CME belongs (the local CIM), so as to obtain the attribute metadata of the content which is registered with another CIM.

### BRIEF DESCRIPTION OF THE DRAWINGS

The accompanying drawings are used to provide a further understanding of the present invention, constitute a part of this specification, and do not limit the present invention.
FIG 1 is a schematic flow chart of interaction between a CME and a CIM in the prior art;
FIG 2 is a schematic flow chart of interaction between a CME and a CIM if the CIM has no attribute metadata of a content in the prior art;
FIG 3 is a schematic diagram of relationship between local CIMs and a center CIM according to an embodiment of the present invention;
FIG 4 is a schematic flow chart of interaction in which an index is established, by a local CIM, for a content at a center CIM according to an embodiment of the present invention;
FIG 5 is a schematic flow chart of interation in which a local CIM inquires a center CIM for index data according to an embodiment of the present invention;
FIG 6 is a schematic diagram of generating a CIM list according to an embodiment of the present invention;
FIG 7 is a schematic view of inquiring, by a local CIM, remote CIMs for a content according to another embodiment of the present invention;
FIG 8 is a flow chart of interaction between a local CIM and a remote CIM according to another embodiment of the present invention;
FIG 9 is a flow chart of a temporary registration of a content according to another embodiment of the present invention;
FIG 10 is a schematic structural view of a CIM according to an embodiment of the present invention;
FIG 11 is a schematic structural view of a CIM according to another embodiment of the present invention;
FIG 12 is a structural block diagram of an index request unit in FIG 11;
FIG 13 is a schematic structural view of a CIM according to another embodiment of the present invention;
FIG 14 is a schematic structural view of a CIM according to another embodiment of the present invention;
FIG 15 is a structural block diagram of a registration processing unit in FIG 14; and
FIG 16 is a structural block diagram of a CIM which implements a temporary registration according to an embodiment of the present invention.

### DETAILED DESCRIPTION OF THE EMBODIMENTS

In order to make the objectives, technical solutions, and advantages of the present invention more comprehensible, embodiments of the present invention are described in detail below with reference to the accompanying drawings. Here, the exemplary embodiments and the illustrations of the present invention are only intended to explain the present invention, rather than to limit the present invention.

### Embodiment 1

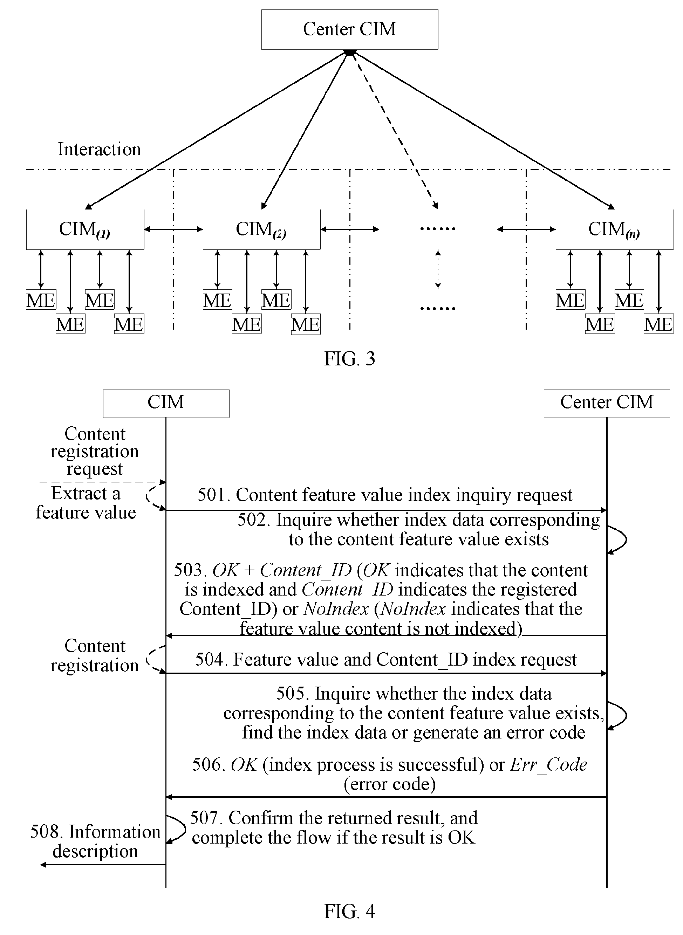

An interactive processing method between CIMs according to an embodiment of the present invention provides an interactive processing method between CIMs in a center CIM index manner. In this embodiment, when a content is registered with a CIM, the CIM establishes feature-value index data at a center CIM by using registered registration data such as a registered content feature value and a corresponding Content-ID according to the content feature value, so that the center CIM may control and manage all the contents registered with all CIMs. If the feature-value index data only includes the registered content feature value stored in the center CIM and the corresponding Content ID, the Content ID further includes ID information of a register home CIM of the content. If the Content-ID and the ID of the register home CIM of the content exist respectively, the index data established for the registered content feature value includes three parts, that is, the registered content feature value, the Content ID, and the ID of the register home CIM. After the feature-value index data is established, when any CIM sends an inquiry request carrying the content feature value to the center CIM, the center CIM may make an inquiry in the index data according to the content feature value, extract the Content ID or ID of the register home CIM corresponding to the content feature value, and return it to the CIM which makes the request. In this embodiment, the center CIM only interacts with the CIM, rather than directly interacts with a CME, as shown in FIG 3.

The interaction between CIMs is guided by the feature-value index data of the center CIM, that is, when detecting that the content requested, by the CME, to be identified has no corresponding registration data in the local CIM, the local CIM sends an inquiry request which includes the content feature value to the center CIM for inquiring whether index data corresponding to the content feature value exists, if index data corresponding to the content feature value exists, the center CIM sends the Content ID (Content_ID) including the ID of the register home CIM to the local CIM; and if the Content ID does not include the ID of the register home CIM, the center CIM respectively sends the Content ID and the ID of the register home CIM to the CIM which makes the request. The local CIM resolves the received Content ID, and obtains the ID of the register home CIM of the content, or directly obtains the ID of the register home CIM of the content. The local CIM may acquire a remote CIM with which the content is registered according to the ID information of the register home CIM. Therefore, the local CIM sends an identification request to the remote CIM to obtain attribute metadata of the content, and returns the attribute metadata of the content to the CME which sends the identification request. The CME carries out subsequent policy control operations.

In the embodiment of the present invention, when the Content ID includes the ID of the register home CIM, a format of the Content ID may be:
xxxxxxxxxxxxxx@CIM_Identifier
A part before @ (which may be a character string or a numeric string) is a registration ID of the content, which is equivalent to a conventional Content ID and is used to identify the content. The CIM_Identifier after @ indicates the ID of the register home CIM which distributes the registration ID. It can be seen that, the format of the Content ID in this embodiment of the present invention is different from that of the conventional Content ID. The conventional Content ID only includes the part before @ in this embodiment, that is, the registration ID of the content, while the Content ID in this embodiment includes both the registration ID and the ID of the register home CIM.

At this time, feature value index (fingerprint_Index) data in the center CIM may be expressed in the first manner:

```
     <Fingerprint_Index>
       <Fingerprint>
          Fingerprint FINGERPRINT_VALUE
       </Fingerprint>
       <Content_ID>
          Content_ID CONTENT_ID_VALUE
       </Content_ID>
     </Fingerprint_Index>
```

The feature-value index data includes two parts: a content feature value and a Content ID, where the Content ID information includes an ID of the register home CIM.

When the Content ID does not include the ID information of the register home CIM, the feature-value index data may be expressed in the second manner:

```
     <Fingerprint_Index>
       <Fingerprint>
          Fingerprint FINGERPRINT_VALUE
       </Fingerprint>
       <Content_ID>
          Content_ID CONTENT_ID_VALUE
       </Content_ID>
       <RegisteredCIM>
          RegisteredCIM_Identifier REGISTEREDCM_ID_VALLTE
        </RegisteredCIM>
     </Fingerprint_Index>
```

The feature-value index data includes three parts: a content feature value, a Content ID, and ID information of the register home CIM.

When requesting the center CIM to establish a feature value index for the registered content, the local CIM may requests the center CIM to establish the feature value index for the registered content after registering the content, that is, the processing flow starts from step 504 shown in FIG 4, or the local CIM may firstly inquire the center CIM about whether the content has the feature value index in the center CIM before the registration flow, that is, the processing flow starts from step 501 shown in FIG 4.

When another entity such as a user or a content provider requests the local CIM to register the content, the local CIM interacts with the center CIM to inquire an index or establish an index correspondingly, and the steps are as follows.

In step 501, after receiving a content registration request carrying the content feature value or the content itself from the CME, the local CIM sends a request for inquiring content-feature-value index to the center CIM to inquire whether the index data corresponding to the content feature value in the content-feature-value index inquiry request exists in a database of the center CIM, in which the request carries the received content feature value or the content feature value extracted from the received content.

In step 502, after receiving the request for inquiring content-feature-value index, the center CIM inquires whether index data corresponding to the content feature value included in the request for inquiring content-feature-value index exists in the database, and if index data corresponding to the content feature value included in the request for inquiring content-feature-value index exists in the database, the center CIM extracts the Content ID corresponding to the content feature value.

In step 503, the center CIM sends a response message to the local CIM to respond with an index inquiry result, and if the index data corresponding to the content feature value exists, the center CIM returns a confirmation message (such as an OK message) including the Content ID corresponding to the content feature value, indicating that Content ID information is successfully inquired, where the Content ID carries the ID of the register home CIM; and if the index data corresponding to the content feature value does not exist, the center CIM returns a parameter description message including NoIndex (no index).

In step 504, after receiving the response message from the center CIM, if the response message includes the Content ID, the local CIM sends the content feature value corresponding to the Content ID to the entity which requests registering the content, and the content registration flow ends. If the parameter description of the response message is NoIndex, the local CIM registers the content, and generates a new Content ID corresponding to the content feature value after the registration, where the new Content ID includes an ID of the local CIM. After the registration, the local CIM sends an index establishment request to the center CIM to establish an index for the content feature value. The index establishment request message includes the content feature value and the Content ID which are successfully registered with the local CIM.

In step 505, after receiving the local CIM the index establishment request for the content feature value from, the center CIM implements an inquire similar to step 502, so as to inquire whether index data corresponding to the content feature value exists, and if no index data corresponding to the content feature value exists, the center CIM establishes an index according to the first format of the feature-value index data, which is described above, stores the content feature value and the Content ID in the index establishment request, and enables the content feature value strictly corresponding to the Content ID. If the index data corresponding to the content feature value exists in the center CIM, error code information is generated, where the error code information may include information indicating that the index is established, the registered content feature value in the index data, and the corresponding Content ID, and the index establishment is suspended.

In step 506, the center CIM returns a processing result to the local CIM which requests establishing the index, for example, OK indicates that the index can be established, and that the index is successfully established, and the error code information indicates that the index cannot be established, or when the error code message includes the Content ID, the error code message indicates that the content feature value has been registered, and the index has been established at the center CIM.

In step 507, after the local CIM that requests establishing the index for the content feature value receives the returned message, if the returned message is resolved to include the information indicating that the index is successfully established, complete the index establishment flow, and interact with other registration entities. If the returned message is the error code message, resolve the error code message to obtain the meaning indicated by the errror code messafe, and proceed to a next step of the flow.

In step 508, the local CIM sends the resolved error code message to the entity that requests for registration, and the corresponding interaction flow ends.

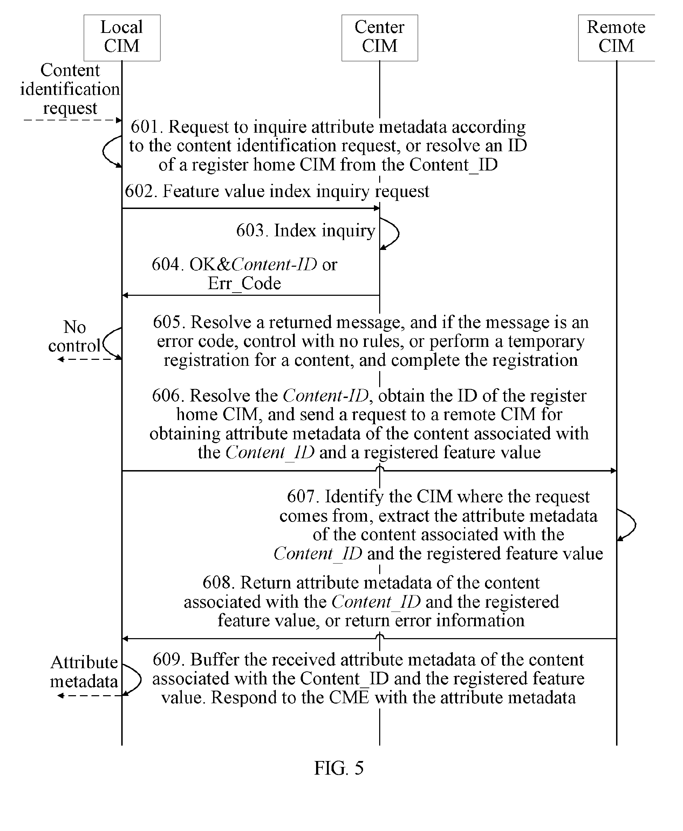

As shown in FIG 5, the local CIM may interact with the remote CIM with the guide of the center CIM.

In step 601, when receiving from a CME belonging to the local CIM a content identification request for a certain content, the local CIM inquires attribute metadata according to the content identification request, or resolves the ID of the register home CIM from the Content ID. For example, if the content identification request includes the content feature value, the local CIM inquires corresponding registration data in the database of the CIM according to the content feature value, and finds attribute metadata of the content corresponding to the content feature value according to the registration data. If the content identification request includes the Content ID, the local CIM may directly inquire the registration data corresponding to the Content ID preferably according to the Content ID, and obtain the corresponding attribute metadata of the content after finding the registration data, or may resolve the Content ID according to the format of the Content ID, which is described above, so as to acquire the ID of the register home CIM of the content, and the flow jumps to operations after a step similar to step 606. If the content identification request includes both the content feature value and the Content ID, the local CIM may also select to inquire whether the registration data of the content exists in the local CIM according to the content feature value.

If the registration data of the content is not found in the local CIM, and the ID of the register home CIM of the content is not acquired, the next step is initiated accordingly.

In step 602, the local CIM sends to the center CIM a request for inquirying content-feature-value index to inquire whether the index data corresponding to the content feature value included in the inquiry request message exists in the center CIM, where the inquiry request includes the content feature value.

In step 603, after receiving the inquiry request message, the center CIM inquires an index in an index database of the center CIM according to the content feature value. If the index data corresponding to the content feature value is found, a corresponding Content ID value is extracted. If the index data corresponding to the content feature value does not exist, or other errors occur, corresponding error code information is generated.

In step 604, the center CIM returns the processing result to the local CIM in the form of a response message, where the processing result may be an OK message which includes the Content ID and indicates that the index of the content feature value exists in the center CIM, or may be a message which includes the error code information and indicates that the index of the content feature value does not exist or that errors occur during the operations.

In step 605, the local CIM resolves and processes the response message returned by the center CIM. If the response message includes the Content ID, it indicates that the index data exists, and the Content ID included in the response message is extracted. If the response message includes the error code, the error code information is returned to the CME, and/or a temporary registration is performed, that is, an operation similar to a registration process is performed for the content. However, the temporary attribute metadata generated for the content is null, or is some simple attribute description (such as a content type), and the generated Content ID includes information indicating that the registration is a temporary registration rather than a formal registration; or, the temporary attribute metadata is not null, and the temporary attribute metadata includes information indicating that the registration data is temporary registration data. Then, the temporary registration information is returned to the CME, and the processing flow ends. Through the temporary registration, it can be prevented that the local CIM invalidly interacts with the center CIM after receiving an identification request for a content that is not formally registered. After the temporary registration, temporary registration data may be periodically checked, so as to determine whether it is necessary to delete the temporary registration data. Specifically, a non-referenced time or a storage time of the temporary registration data may be predefined. When a time that the temporarily registered content is not visited reaches a predefined non-referenced time length, or the storage time of the temporary registration data reaches a predefined non-referenced time length, the temporary registration data is deleted, so as to save storage and computing resources. When the temporarily registered content is referenced inside the local CIM, that is, the CME has an identification request for the content, a latest referenced time and a corresponding non-referenced time are updated in a registration entry.

In step 606, the local CIM resolves the Content ID to obtain the ID of the register home CIM, and sends an obtaining request to the remote register home CIM accordingly, to request obtaining the attribute metadata corresponding to the Content ID, and may also requst obtaining a registered content feature value. The obtaining request may also include a parameter value indicating identity information of the local CIM.

In step 607, after receiving the obtaining request message, the remote CIM may identify the local CIM (for example, identify whether the local CIM is reliable according to the identity information of the local CIM), extract the Content ID included in the obtaining request message, and extract one or more pieces of corresponding attribute metadata in a database of the remote CIM in response to the request, or generate corresponding error information. If the local CIM further requests obtaining a registered content feature value in request for obtaining the attribute metadata, the remote CIM further extracts a corresponding registered content feature value when extracting the attribute metadata.

In step 608, the remote CIM extracts one or more pieces of attribute metadata corresponding to the Content ID, and may further extract the registered content feature value. Then, the remote CIM returns the attribute metadata to the local CIM that sends the obtaining request, or returns corresponding error information.

In step 609, after receiving the one or more pieces of attribute metadata returned by the remote CIM, the local CIM sends the attribute metadata to the CME which requests identifying the content. If the registered content feature value is also returned, the attribute metadata and the registered content feature value may be stored and managed at the local CIM for a limited time. A time length of the storage management may be set, so as to facilitate content identification and effective utilization of the computing resources. If the returned information is the error information, the processing flow from step 606 to step 609 is performed again, or the error information is sent to the CME which requests identifying the content, according to the description of the error information. So far, the interactive processing flow between the CIMs ends.

In the interactive processing method between CIMs according to the embodiment of the present invention, the problem that how the local CIM effectively interacts with the remote CIM is addressed when no registration data of the content requested, by the CME, to be identified exists in the CIM to which the CME belongs, so as to obtain registration information and metadata of the content which is registered with another CIM.

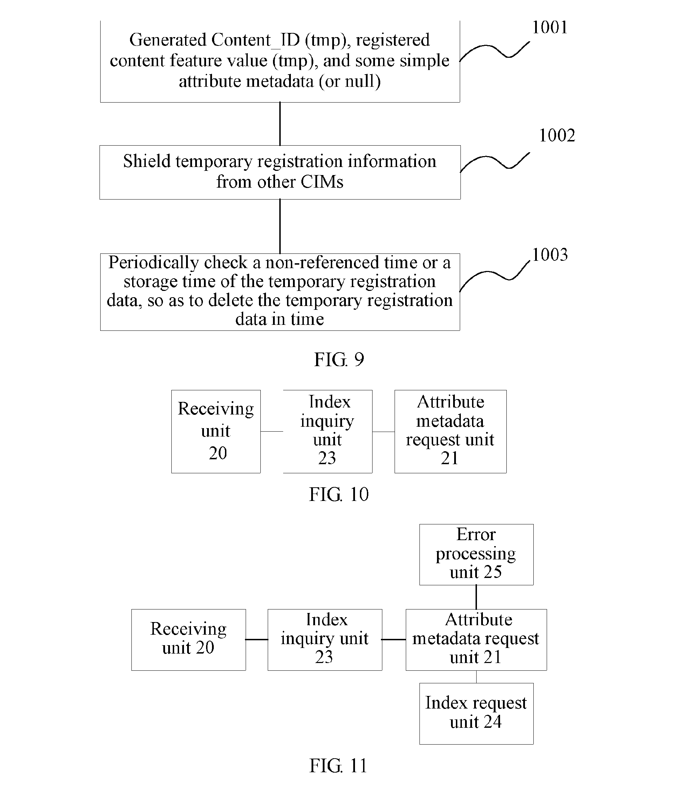

In the interactive processing method between CIMs according to the embodiment of the present invention, a structural block diagram of the local CIM is shown in FIG 10, which includes a receiving unit 20, an index inquiry unit 23, and an attribute metadata request unit 21.

The receiving unit 20 is configured to receive a content identification request from a CME.

The index inquiry unit 23 is configured to send a request to a center CIM for inquiring index data corresponding to the content feature value of a content requested to be identified when registration data of the content requested to be identified is not found in a local CIM.

The attribute metadata request unit 21 is configured to, after an inquiry result returned by the center CIM is received, send, according to an ID of a remote register home CIM, a request to a corresponding register home CIM, for obtaining the attribute metadata of the content requested to be identified, if the inquiry result carries the ID of the remote register home CIM.

In another embodiment of the present invention, as shown in FIG 11, the CIM further includes an index request unit 24 and an error processing unit 25.

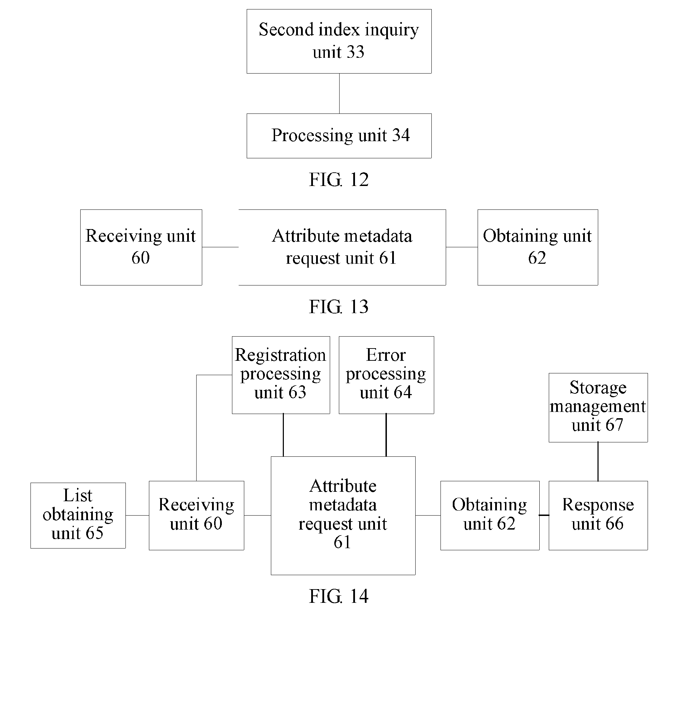

The index request unit 24 is configured to, after a content registration request is received from a CME, request, by a local CIM, inquiring index data of a content requested to be registered, where the request carries a content feature value corresponding to the content requested to be registered. As shown in FIG 12, the index request unit includes a second index inquiry unit 33 and a processing unit 34. The second index inquiry unit 33 is configured to send to a center CIM a request for inquiring the index data corresponding to the content feature value after the content registration request is received. The processing unit 34 is configured to complete the content registration if a Content-ID corresponding to the content feature value or an ID of a register home CIM returned by the center CIM is received; and if a received index-data inquiry result returned by the center CIM indicates that the no index data exists, the processing unit 34 is configured to register, by the local CIM, the content, generate registration data information, and request the center CIM to generate index data corresponding to the registration data of the registered content.

The error processing unit 25 is configured to return, by the local CIM, a content not-registered message to the CME or to temporarily register the content requested, by the CME, to be identified if the inquiry result returned by the center CIM indicates that no index data corresponding to the content feature value exists.

The interaction flows in FIG 4 and FIG 5 are described above by taking a situation as an example that the ID of the register home CIM is set in the Content ID. In a situation that the ID of the register home CIM and the Content ID are set separately, that is, the Content ID in this embodiment is the same as a conventional Content ID, when the local CIM interacts with the center CIM or the remote CIM according to FIG 4 and FIG 5, the message further carries the ID of the register home CIM additionally if the message carries the Content ID. When establishing an index, the center CIM may establish the index according to the second format of the feature-value index data, which is described above.

### Embodiment 2

An embodiment of the present invention provides an interactive processing method between the CIMs, which is implemented in a form of a CIM list. In this embodiment of the present invention, when a CIM is created, a list of all created CIMs (such as a plurarity of companies in an industry, or CIMs in a country area) in a designated large area may be obtained through an existing CIM, the created CIMs in the list are notified that a new CIM is successfully created, and the new CIM may be updated to the existing CIM list after the created CIMs confirm that the new CIM is successfully created. During the content identification, if a local CIM does not have corresponding registration data, an identification request message may be sent to remote CIMs in the list. If none of messages returned by the CIMs in the list have the content registration data of the CIM, a temporary registration, which is the same with the temporary registration in Embodiment 1, may be initiated. If corresponding content registration data exists, one or more pieces of corresponding attribute metadata, and the registered content feature value may be obtained. After the attribute metadata and the registered content feature value are obtained, the attribute metadata and the registered content feature value may be stored and managed at the local CIM for a limited time. A time length of the storage management may be set by oneself, so as to facilitate content identification and effective utilization of computing resources.

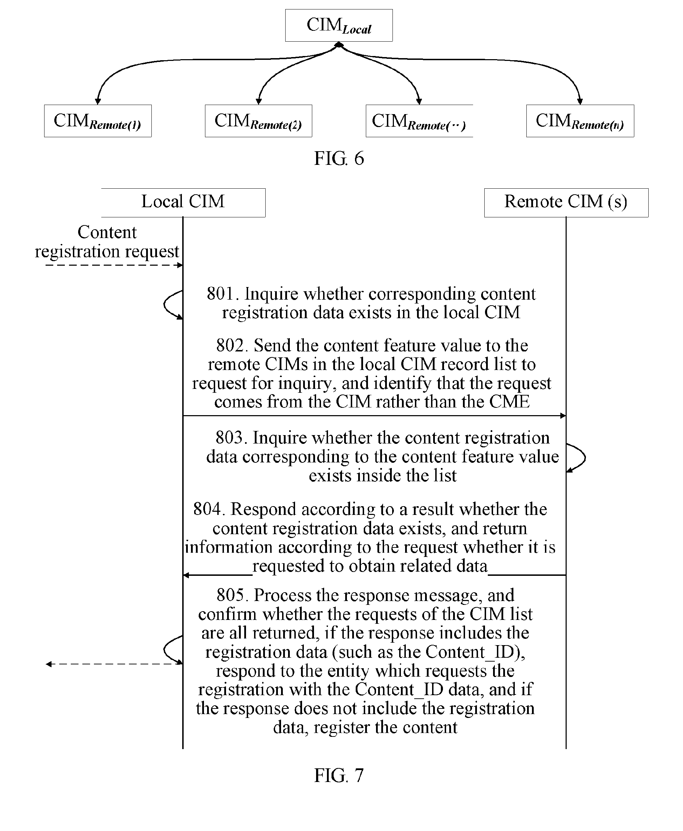

FIG 6 is a diagram about a relation between a new local CIM and existing remote CIMs after a CIM list is updated. As shown in FIG 6, when a new local CIM is created, an existing CIM list in a region, such as a designated region and a district region, may be obtained from a known CIM or in another manner. The new local CIM is added to the list in a predefined format, and sends a request message for updating the CIM list to other CIMs in the list accordingly. The sent request may include certifiable description information of the local CIM, which indicates that the CIM that sends the request message is reliable. After receiving the request message, the remote CIMs confirm that the CIM is reliable and capable of sending the request message of this type, and the remote CIMs update the CIM list in the region. So far, the relevant CIM list in the region is generated.

When a user or another entity sends a content registration request to the local CIM, the local CIM may inquire whether corresponding content registration data exists in the CIMs in the list, if the local CIM does not have corresponding registered content. As shown in FIG 7, the steps are as follows.

In step 801, after receiving a content registration request carrying a content feature value or a content itself, the local CIM inquires, according to the content feature value or a content feature value obtained by extracting the content, whether corresponding content registration data exists in the local CIM.

In step 802, if no corresponding content registration data exists in the local CIM, the local CIM sends an inquiry request to remote CIMs in the list, to request the remote CIMs to inquire whether the content registration data corresponding to the content feature value included in the inquiry request exists, and identifies that the inquiry request is from the CIM rather than the CME.

In step 803, after receiving the inquiry request, the remote CIMs inquire whether the content registration data corresponding to the content feature value exists in the CIMs.

In step 804, the remote CIMs respond to the local CIM with an inquiry result, and return a response message according to a result whether it is required to obtain the content registration data in the inquiry request, for example, it is requested to return one or more pieces of attribute metadata, or it is requested to return a registered content feature value and/or a Content ID.

In step 805, the response message is processed. After the local CIM receives returned information, the inquiry flow ends if it is resolved that the response message includes information indicating that the content registration exists, and the local CIM interacts with the entity which requests the registration. If all remote CIMs in the local CIM list return response messages, and all the response messages returned by the remote CIMs are error code messages (that is, none of the messages include the content registration data), the local CIM registers the content, and generates a new Content ID corresponding to the content after the registration, where the Content ID includes ID information of the register home CIM.

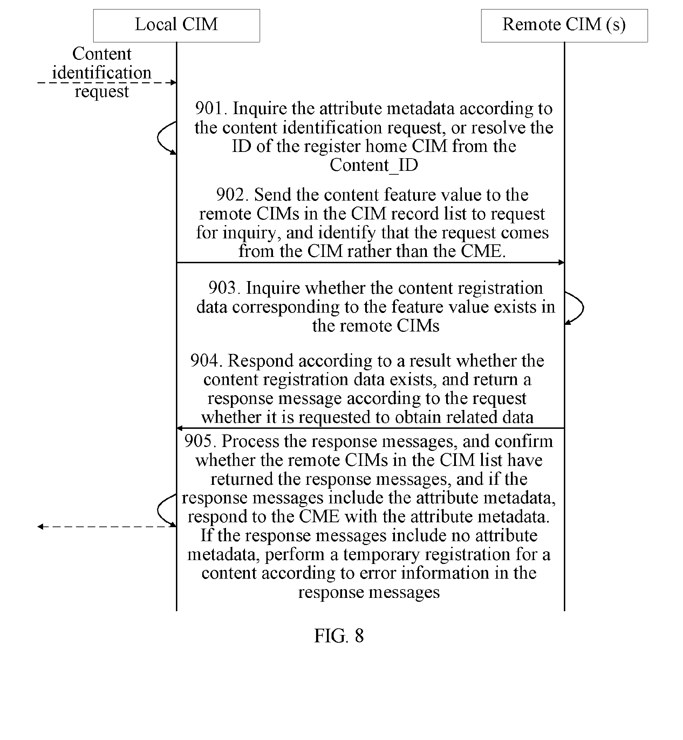

As shown in FIG 8, the local CIM may interact with the remote CIM through a pre-stored CIM list.

In step 901, after receiving a content identification request for a certain content from a CME belonging to the local CIM, the identification request including the content feature value and/or the Content ID, the local CIM inquires attribute metadata according to the content identification request, or resolves an ID of a register home CIM from the Content ID. For example, if the content identification request includes the content feature value, the local CIM inquires corresponding registration data in a database of the CIM according to the content feature value, and finds attribute metadata of the content corresponding to the feature value according to the registration data. If the content identification request includes the Content ID, the local CIM may directly inquire the registration data corresponding to the Content ID preferably according to the Content ID, and obtain the corresponding attribute metadata of the content after finding the registration data, or may resolve the Content ID according to the format of the Content ID, which is described above, to acquire the ID of the register home CIM of the content. Then the next step is performed, in which an obtaining request is sent to the register home CIM, which is the same as the sending the obtaining request in step 606 in FIG 5 according to Embodiment 1. At this time, the remote CIM in step 902 is the register home CIM. If the content identification request includes both the content feature value and the Content ID, the local CIM may also select to inquire, according to the feature value, whether the registration data of the content exists in the local CIM.

If the local CIM does not find the registration data of the content, or acquire the ID of the register home CIM of the content, the next step is initiated accordingly.

In step 902, the local CIM sends an identification request to the remote CIMs in the CIM list in a one-to-many manner according to the stored CIM list, so as to request the remote CIMs for identification process, where the sent identification request message includes the content feature value. The identification request message may also include verifiable information for the identity of the local CIM. If the ID of the register home CIM of the content is acquired in the step 901, in this step, the local CIM only sends an obtaining request carrying the Content ID to the register home CIM, so as to request obtaining the attribute metadata corresponding to the Content ID.

In step 903, after receiving the identification request, the remote CIMs confirm (validate and process) an identity of the CIM which sends the identification request, and inquire whether the content registration data corresponding to the content feature value exists in the remote CIMs, or generate error code description with a designated meaning.

In step 904, the remote CIMs return a processing result to the local CIM which requests identifying the content, so as to respond with a result whether corresponding content registration data exists in the remote CIMs. When it is requested to return corresponding attribute metadata (and the registered content feature value) in the identification request, corresponding data is returned at the same time. Otherwise, error code description information with a designated meaning is returned.

In step 905, after receiving the response messages returned by the remote CIMs, if the corresponding attribute metadata is obtained as required, the local CIM performs a null operation for subsequent response messages, stores and manages the obtained one or more pieces of attribute metadata and the registered content feature value for a limited time, and responds to the CME with a corresponding attribute metadata value. The process ends. Otherwise, the local CIM returns the description information of the error code to the CME after directly receiving all the responses in the CIM list, that is, the local CIM obtain no registration information of the corresponding content, and procodure ends. In order to prevent the invalid interaction when the timeliness of the CIM is directed to the content, a processing flow of the temporary registration management of the content may be selected according to policies after the error codes of all the remote CIMs are received, that is, an operation similar to a registration process is performed for the content. However, the attribute metadata generated for the content is null, or is some simple attribute description (such as the content type), and the generated Content ID includes information indicating that the registration is a temporary registration rather than a formal registration; or, the temporary attribute metadata is not null, and the temporary attribute metadata includes information indicating that the registration data is temporary registration data. Then, the information of the temporary registration is returned to the CME, and the processing flow ends. After the temporary registration, the temporary registration data may be periodically checked, so as to determine whether it is necessary to delete the temporary registration data. Specifically, a non-referenced time may be predefined. When a time that the temporarily registered content is not visited reaches a predefined non-referenced time length, or a storage time length of the temporary registration data reaches a predefined time length, the temporary registration data is deleted, so as to save storage and computing resources. When the temporarily registered content is referenced inside the local CIM, that is, the CME has an identification request for the content, a latest referenced time is updated in a registration entry.

In the steps of FIG 7 and FIG 8 according to the embodiment of the present invention, the Content ID included in the message carries the ID of the register home CIM at the same time. The Content ID may also not include ID of the CIM which registers the content. However, the message carrying the Content ID in the corresponding steps should further carry the ID information of the register home CIM at the same time.

In the embodiments of the present invention, the problem that how the local CIM effectively interact with the remote CIMs is addressed when no registration data of the content, requested by the CME, to be identified exists in the CIM to which the CME belongs, so as to obtain registration information and metadata of the content which is registered with another CIM. In addition, after the content is registered with one CIM, in a large region to which the CIM belongs, the content may be effectivey identified at the non-registered CIMs in the region.

In the embodiment of the present invention, a structural block diagram of a local CIM is shown in FIG 13. The local CIM includes a receiving unit 60, an attribute metadata request unit 61, and an obtaining unit 62.

The receiving unit 60 is configured to receive a content identification request from a CME.

The attribute metadata request unit 61 is configured to send, according to the pre-configured CIM list, a request for obtaining attribute metadata corresponding to a content requested to be identified, to remote CIMs in a list, when registration data of the content requested to be identified is not found in a local CIM.

The obtaining unit 62 is configured to receive response messages returned by the remote CIMs.

In this embodiment of the present invention, as shown in FIG 14, the CIM further includes a list obtaining unit 65, a registration processing unit 63, an error processing unit 64, a response unit 66, and a storage management unit 67.

The list obtaining unit 65 is configured to obtain and update the pre-configured CIM list, and send a request to each remote CIM in the list to update its pre-configured CIM list when a new CIM is created.

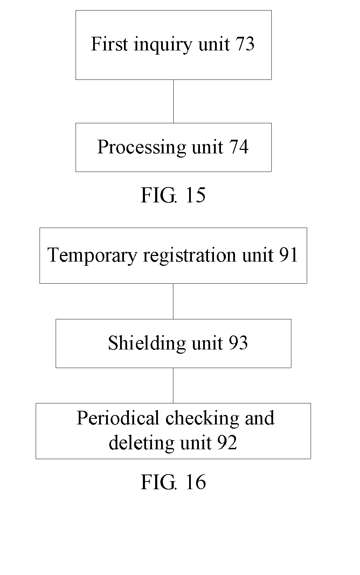

The registration processing unit 63 is configured to perform registration inquiry and corresponding operations after a content registration request is received. The registration processing unit 63 specifically includes (as shwon in FIG 15) a first inquiry unit 73 and a processing unit 74. The first inquiry unit 73 is configured to inquire the remote CIMs in the list for registration data corresponding to a content feature value of a content requested to be registered in the content registration request after the content registration request is received. The processing unit 74 is configured to complete the inquiry if the registration data corresponding to the content feature value returned by a remote CIM in the list is received; and to register, by the local CIM, the content, and generate a Content-ID and ID information of the register home CIM if the received inquiry results returned by all the remote CIMs in the list include no registration data.

The error processing unit 64 is configured to send to a CME a message including information that the content is not registered, and/or temporarily register the content requested, by the CME, to be identified, if the response messages returned by all the remote CIMs in the list include no attribute metadata.

The response unit 66 is configured to send the attribute metadata to the CME if the response messages returned by the remote CIMs include the attribute metadata.

The storage management unit 67 is configured to buffer the attribute metadata and the content feature value when the response messages further include the registered content feature value.

### Embodiment 3

In this embodiment of the present invention, a temporary registration flow is further described in detail.

FIG 9 is a schematic flow chart of temporarily registering a content according to Embodiment 3 of an interactive processing method between CIMs according to the present invention. The flow includes the following steps.

In step 1001, the content is registered according to the registration flow, attribute metadata generated according to the content is null (or some simple attribute description), and a Content ID distributed for the content includes a field indicating that registration information is temporary registration information; temporary attribute metadata is not null, and the temporary attribute metadata includes information indicating that registration data is temporary registration data.

In step 1002, a temporary registration state of the content is set to be visible only to a CIM to which the CME belongs, that is, the temporary registration information of the content is shielded from other CIMs.

If the temporary registration information is not found when a remote CIM inquires a local CIM that performs the temporary registration for the registration data corresponding to the content, an inquiry result of the remote CIM is that the corresponding content is not registered with the local CIM.

In step 1003, the temporary registration data is periodically checked, and it is determined whether to delete the temporary registration data according to a referenced time.

After the content is temporarily registered, another interaction may be initiated to determine whether the content is registered, so the temporary registration data should be preserved for a period of time. In order to control a time length that the temporary registration data is preserved for, a non-referenced time length or a storage time of the temporary registration data may be predefined. The non-referenced time refers to a time length that the temporarily registered content is not accessed from the last access (a CME requests identifying the content). The storage time length of the temporary registration data refers to a storage time length from a time point when the content is temporarily registered to a time point when the content is checked.

If the non-referenced time is predefined, and the temporarily registered content is referenced (accessed) inside the CIM, that is, the CME requests identifying the content, the non-referenced time is updated.

In order to avoid too much temporary registration data at the CIM, and to prevent the content from being registered with another CIM at a time after the content is temporarily registered with the CIM, the temporary registration data may be periodically checked, so as to determine whether to delete the temporary registration data according to the non-referenced time or the storage time; otherwise, null attribute metadata that is temporarily registered may be incorrect. When a time that the temporarily registered content is not visited reaches the predefined non-referenced time length, or the storage time length of the temporary registration data reaches a predefined time length, the temporary registration data is deleted, so as to save storage and computing resources.

In this embodiment of the present invention, the CIM (as shown in FIG 16) that implements the temporary registration includes a temporary registration unit 91, a shielding unit 93, and a periodical checking and deleting unit 92.

The temporary registration unit 91 is configured to, after a content identification request is received from a CME, generate a temporary Content-ID and temporary attribute metadata corresponding to content if neither the local CIM nor the remote CIM includes registration data corresponding to a content feature value of a content requested to be identified.

The shielding unit 93 is configured to set a temporary registration state of the content to be visible only to a CIM to which the CME belongs, that is, the temporary registration information of the content is shielded from other CIMs.

The periodical checking and deleting unit 92 is configured to periodically check temporary registration data, and delete the temporary registration data when the non-referenced time or the storage time reaches a preset value.

Through the temporary registration flow, the invalid interaction when the timeliness of the CIM is directed to the content can be effectively prevented.

Persons of ordinary skill in the art may understand that all or part of the steps of the method according to the embodiments of the present invention may be implemented by a program instructing relevant hardware. The program may be stored in a computer readable storage medium, such as a Read-Only Memory (ROM)/Random Access Memory (RAM), a magnetic disk, or a compact disk.

The objectives, technical solutions, and beneficial effects of the present invention have been described in further detail through the above specific embodiments. It should be understood that the above descriptions are merely specific embodiments of the present invention, but not intended to limit the scope of the present invention. Any modification, equivalent replacements, or improvements made without departing from the spirit and principle of the present invention should fall within the protection scope of the present invention.

## Claims

1. An interactive processing method between Content-Identifier (ID) management servers (CIMs), comprising:
after receiving a content identification request from a Content Management Entity (CME), requesting, by a local CIM, a center CIM to inquire index data corresponding to a content feature value of a content requested to be identified, if registration data of the content requested to be identified is not found in the local CIM; and
receiving an inquiry result returned by the center CIM, and sending, by the local CIM and according to an ID of a remote register home CIM, a request for obtaining attribute metadata of the content requested to be identified, to a corresponding register home CIM, if the inquiry result carries the ID of the remote register home CIM.

2. The method according to claim 1, further comprising:
after receiving the content registration request from the CME, requesting, by the local CIM, the center CIM to inquire index data for the content requested to be identified, wherein the content registration request carries the content feature value corresponding to the content requested to be registered.

3. The method according to claim 2, wherein the requesting the center CIM to inquire the index data for the content to be identified comprises:
requesting the center CIM to inquire the index data corresponding to the content feature value;
and
completing a content registration if a Content-ID corresponding to the content feature value or an ID of the register home CIM returned by the center CIM is received; and if a received index-data inquiry result returned by the center CIM indicates that the index data does not exist, registering, by the local CIM, the content, generating registration data information, and requesting the center CIM to generate the index data corresponding to the registration data of the registered content.

4. The method according to claim 1, further comprising:
if the inquiry result returned by the center CIM indicates that no index data corresponding to the content feature value exists, returning, by the loal CIM, a message indicating that the content is not registered, to the CME, or temporarily registering the content requested, by the CME, to be identified.

5. The method according to claim 4, wherein:
temporary attribute metadata generated in the temporary registration is null, and a generated Content-ID indicates that the registration information is temporary registration information; or the temporary attribute metadata generated in the temporary registration comprises information indicating that the registration data is temporary registration data.

6. The method according to claim 1, further comprising:
if the content identification request carries an ID of a remote register home CIM, sending, by the local CIM and according to the ID of the remote register home CIM, a request for obtaining the attribute metadata of the content requested to be identified, to a corresponding remote register home CIM.

7. An interactive processing method between Content-Identifier (ID) management servers (CIMs), comprising:
after receiving a content identification request from a Content Management Entity (CME), sending, by a local CIM and according to the pre-configured CIM list, a request for obtaining attribute metadata corresponding to a content requested to be identified, to remote CIMs in a list, if registration data of the content requested to be identified is not found in the local CIM; and
receiving response messages returned by the remote CIMs.

8. The method according to claim 7, further comprising:
when a new CIM is created, obtaining and updating the pre-configured CIM list, and sending a request to each remote CIM in the list to update its pre-configured CIM list ; and
updating, by the remote CIMs, the pre-configured CIM list of the remote remote CIMs after confirming identity information of the new CIM.

9. The method according to claim 7, further comprising:
after receiving a content registration request, inquiring, by the local CIM, the remote CIMs in the list for the registration data corresponding to a content feature value of the content requested to be registered; and
if the registration data corresponding to the content feature value returned by a remote CIM in the list is received, terminating the inquiry; and if the received inquiry results returned by all the remote CIMs in the list comprise no registration data, registering, by the local CIM, the content, wherein the registering comprises generating a Content-ID and ID information of a register home CIM.

10. The method according to claim 7, further comprising:
when the response messages returned by the remote CIMs comprise the attribute metadata, sending, by the local CIM, the attribute metadata to the CME.

11. The method according to claim 10, further comprising:
when the response messages further comprise a registered content feature value, buffering the attribute metadata and the content feature value.

12. The method according to claim 7, further comprising:
when the response messages returned by all the remote CIMs in the list comprise no attribute metadata, sending to the CME a message comprising information that the content is not registered, and/or temporarily registering the content requested, by the CME, to be identified.

13. The method according to claim 12, wherein:
temporary attribute metadata generated in the temporary registration is null, and a generated Content-ID indicates that the registration information is temporary registration information; or the temporary attribute metadata generated in the temporary registration comprises information indicating that the registration data is temporary registration data.

14. The method according to claim 12, further comprising:
periodically checking the temporary registration data, and determining whether to delete the temporary registration data according to a predefined non-referenced time or storage time.

15. A temporary content processing method of a Content-Identifier (ID) management server (CIM), comprising:
after receiving a content identification request from a Content Management Entity (CME), generating, by a local CIM, a temporary Content-ID and temporary attribute metadata corresponding to a content if neither the local CIM nor a remote CIM comprises registration data corresponding to a content feature value of the content requested to be identified.

16. The method according to claim 15, further comprising:
periodically checking temporary registration data, and determining whether to delete the temporary Content-ID and the temporary attribute metadata according to a predefined non-referenced time or a storage time.

17. The method according to claim 15, wherein:
the temporary attribute metadata is null, and the Content-ID comprises information indicating that the data is temporary registration data; or the temporary attribute metadata comprises information indicating that the registration data is temporary registration data.

18. The method according to claim 15, further comprising:
shielding temporary registration information of the content from remote CIMs other than the local CIM.

19. An interactive processing apparatus between Content-Identifier (ID) management servers (CIMs), comprising:
a receiving unit, configured to receive a content identification request from a Content Management Entity (CME);
an index inquiry unit, configured to request a center CIM to inquire index data corresponding to a content feature value of a content requested to be identified, if registration data of the content requested to be identified is not found in a local CIM; and
an attribute metadata request unit, configured to, after an inquiry result returned by the center CIM is received, request, according to an ID of a remote register home CIM, obtaining attribute metadata of the content requested to be identified, from a corresponding register home CIM, if the inquiry result carries the ID of the remote register home CIM.

20. The apparatus according to claim 19, further comprising:
an index request unit, configured to, after the content registration request is received from the CME, request by the local CIM to inquire the index data of the content requested to be registered, wherein the content registration request carries the content feature value corresponding to the content requested to be registered.

21. The apparatus according to claim 20, wherein the index request unit comprises:
a second index inquiry unit, configured to request the center CIM to inquire the index data corresponding to the content feature value after the content registration request is received;
a processing unit, configured to terminate a content registration if a Content-ID corresponding to the content feature value or the ID of the register home CIM returned by the center CIM is received; and if a received index-data inquiry result returned by the center CIM indicates that the index data does not exist, to register, by the local CIM, the content, generate registration data information, and request the center CIM to generate the index data corresponding to the registration data of the registered content.

22. The apparatus according to claim 19, further comprising:
an error processing unit, configured to return, by the local CIM, a message that the content is not registered, to the CME or to temporarily register the content requested, by the CME, to be identified if the inquiry result returned by the center CIM indicates that the index data corresponding to the content feature value does not exist.

23. An interactive processing apparatus between Content-Identifier (ID) management servers (CIMs), comprising:
a receiving unit, configured to receive a content identification request from a Content Management Entity (CME);
an attribute metadata request unit, configured to request remote CIMs in a list for obtaining attribute metadata corresponding to a content requested to be identified according to the pre-configured CIM list if registration data of the content requested to be identified is not found in a local CIM; and
an obtaining unit, configured to receive response messages returned by the remote CIMs.

24. The apparatus according to claim 23, further comprising:
a list obtaining unit, configured to obtain and update the pre-configured CIM list, and send a request to the remote CIMs in the list to update the pre-configured CIM list thereof when a new CIM is created.

25. The apparatus according to claim 24, further comprising:
a response unit, configured to send the attribute metadata to the CME if the response messages returned by the remote CIMs comprise the attribute metadata.

26. The apparatus according to claim 25, further comprising:
a storage management unit, configured to buffer the attribute metadata and a content feature value when the response messages further comprise a registered content feature value.

27. The apparatus according to claim 24, further comprising:
a first inquiry unit, configured to inquire the remote CIMs in the list for the registration data corresponding to the content feature value of the content requested to be registered in a content registration request after the content registration request is received; and
a processing unit, configured to terminate the inquiry if the registration data corresponding to the content feature value returned by a remote CIM in the list is received; and to register, by the local CIM, the content, and generate a Content-ID and ID information of a register home CIM if the received inquiry results returned by all the remote CIMs in the list comprise no registration data.

28. The apparatus according to claim 24, further comprising:
an error processing unit, configured to send a message comprising information that the content is not registered to the CME, and/or temporarily register the content requested, by the CME, to be identified if the response messages returned by all the remote CIMs in the list comprise no attribute metadata.

29. A temporary content processing apparatus of a Content-Identifier (ID) management server (CIM), comprising:
a temporary registration unit, configured to, after a content identification request is received from a Content Management Entity (CME), generate a temporary Content-ID and temporary attribute metadata corresponding to a content if neither a local CIM nor a remote CIM comprises registration data corresponding to a content feature value of the content requested to be identified.

30. The apparatus according to claim 29, further comprising:
a periodical checking and deleting unit, configured to periodically check temporary registration data, and delete the temporary Content-ID and the temporary registration data when a non-referenced time or a storage time reaches a preset value.

31. The apparatus according to claim 30, wherein:
the temporary attribute metadata in the temporary registration data generated by the temporary registration unit is null, and the generated Content-ID indicates that the registration information is temporary registration information; or the temporary attribute metadata generated by the temporary registration unit comprises information indicating that the registration data is temporary registration data.

32. The apparatus according to claim 29, further comprising:
a shielding unit, configured to shield the temporary registration information of the content from remote CIMs other than the local CIM.
